(19) Europäisches Patentamt
European Patent Office
Office européen des brevets

(11) **EP 3 282 767 A1**

(12) **EUROPEAN PATENT APPLICATION**
published in accordance with Art. 153(4) EPC

(43) Date of publication:
**14.02.2018 Bulletin 2018/07**

(51) Int Cl.:
*H04W 40/22* (2009.01)     *H04W 40/12* (2009.01)
*H04W 84/04* (2009.01)     *H04W 88/02* (2009.01)

(21) Application number: **16776926.4**

(22) Date of filing: **08.04.2016**

(86) International application number:
**PCT/KR2016/003734**

(87) International publication number:
**WO 2016/163823 (13.10.2016 Gazette 2016/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.04.2015  US 201562144348 P
09.04.2015  US 201562144998 P
13.10.2015  US 201562240547 P**

(71) Applicant: **LG Electronics Inc.
Yeongdeungpo-gu
Seoul 07336 (KR)**

(72) Inventors:
• **JUNG, Sunghoon
  Seoul 06772 (KR)**
• **LEE, Jaewook
  Seoul 06772 (KR)**

(74) Representative: **Cabinet Plasseraud
66, rue de la Chaussée d'Antin
75440 Paris Cedex 09 (FR)**

(54) **RELAY-TERMINAL SELECTION METHOD, PERFORMED BY TERMINAL IN WIRELESS COMMUNICATION SYSTEM, AND TERMINAL USING SAME METHOD**

(57)     Provided are: a relay-terminal selection method, performed by a remote terminal in a wireless communication system; and a terminal using the same method. The method is characterized by selecting candidate relay terminals which meet upper-layer criteria; finally selecting, from among the selected candidate relay terminals, the highest-ranking candidate relay terminal which meets lower-layer criteria; and determining the finally selected candidate relay terminal as the relay terminal.

FIG. 16

EP 3 282 767 A1

**Description**

[Technical Field]

The present invention relates to wireless communication and, more particularly, to a method of selecting a relay terminal, which is performed by a UE, in a wireless communication system and a UE using the method.

[Background Art]

In International Telecommunication Union Radio communication sector (ITU-R), a standardization task for International Mobile Telecommunication (IMT)-Advanced, that is, the next-generation mobile communication system since the third generation, is in progress. IMT-Advanced sets its goal to support Internet Protocol (IP)-based multimedia services at a data transfer rate of 1 Gbps in the stop and slow-speed moving state and of 100 Mbps in the fast-speed moving state.

For example, 3rd Generation Partnership Project (3GPP) is a system standard to satisfy the requirements of IMT-Advanced and is preparing for LTE-Advanced improved from Long Term Evolution (LTE) based on Orthogonal Frequency Division Multiple Access (OFDMA)/Single Carrier-Frequency Division Multiple Access (SC-FDMA) transmission schemes. LTE-Advanced is one of strong candidates for IMT-Advanced.

There is a growing interest in a Device-to-Device (D22) technology in which devices perform direct communication. In particular, D2D has been in the spotlight as a communication technology for a public safety network. A commercial communication network is rapidly changing to LTE, but the current public safety network is basically based on the 2G technology in terms of a collision problem with existing communication standards and a cost. Such a technology gap and a need for improved services are leading to efforts to improve the public safety network.

The public safety network has higher service requirements (reliability and security) than the commercial communication network. In particular, if coverage of cellular communication is not affected or available, the public safety network also requires direct communication between devices, that is, D2D operation.

A D2D operation is also called a proximity service (ProSe) operation in terms of the transmission/reception of signals between proximity devices, and may have various advantages. For example, a D2D UE has a high transfer rate and low latency and can perform data communication. Furthermore, the D2D operation can distribute traffic concentrated on an eNB. If a D2D UE plays the role of a relay, it can also function to extend coverage of an eNB.

A D2D UE may also operate as a UE that plays the role of a relay connecting a sidelink and a cellular link. That is, the D2D UE may operate as a relay UE.

A relay UE may perform the role of a relay between a specific UE and a network. In this case, the specific UE may be called a remote UE. The remote UE may select a relay UE. It is necessary to regulate that a remote UE selects a relay UE according to which method.

[Disclosure]

[Technical Problem]

An object of the present invention is to provide a method of selecting a relay terminal, which is performed by a UE, in a wireless communication system and a UE using the same.

[Technical Solution]

In one aspect, provided is a method of selecting a relay UE in a wireless communication system. The method is performed by a remote UE and includes selecting candidate relay UEs satisfying upper layer criteria, finally selecting a candidate relay UE of a highest ranking which belongs to the selected candidate relay UEs and satisfies lower layer criteria, and determining the finally selected candidate relay UE to be a relay UE.

The lower layer criteria may be criteria related to wireless communication, and the upper layer criteria are criteria not related to wireless communication.

The lower layer criteria may comprise a condition on which quality of a radio link for a sidelink which is a link between the remote UE and the candidate relay UE is a threshold or more.

Measurement of the quality of the radio link for the sidelink may be performed by measuring a sidelink discovery signal received by the remote UE.

A relay connection request message may be transmitted to the determined relay UE.

The finally selected candidate relay UE may be a candidate relay UE which belongs to the candidate relay UEs satisfying the lower layer criteria and which has a best quality of a radio link for a sidelink.

The upper layer criteria may comprise a condition using relay service code which enables connectivity service provided by the candidate relay UE to be identified.

The relay UE may be a UE functioning to relay between the remote UE and the network.

The finally selected candidate relay UE may be selected in an access Stratum (AS) layer of the remote UE.

The finally selected candidate relay UE may be selected in a non-access stratum (NAS) layer of the remote UE.

In another aspect, provided is a user equipment (UE). The UE includes a radio frequency (RF) unit transceiving a radio signal and a processor operatively coupled to the RF unit. The processor selects candidate relay UEs satisfying upper layer criteria, finally selects a candidate relay UE of a highest ranking which belongs to the selected candidate relay UEs and satisfies lower layer criteria, and determines the finally selected candidate relay UE to be a relay UE.

[Advantageous Effects]

It may be inefficient if a remote UE finally selects a relay UE by taking into consideration only criteria related to wireless communication, such as quality of a wireless communication link with a candidate relay UE. For example, a relay service required by a remote UE is for a relay UE to broadcast a signal transmitted by the remote UE. The relay UE can support only unicast. In this case, although a wireless communication link between the relay UE and the remote UE is good, to select the relay UE may be inefficient. In accordance with the present invention, when the remote UE selects the relay UE, it selects the relay UE by taking into consideration both lower layer criteria, that is, criteria related to wireless communication, and upper layer criteria not related to wireless communication. Accordingly, the relay UE can be efficiently selected.

[Description of Drawings]

FIG. 1 shows a wireless communication system to which the present invention is applied.
FIG. 2 is a diagram showing a wireless protocol architecture for a user plane.
FIG. 3 is a diagram showing a wireless protocol architecture for a control plane.
FIG. 4 is a flowchart illustrating the operation of UE in the RRC idle state.
FIG. 5 is a flowchart illustrating a process of establishing RRC connection.
FIG. 6 is a flowchart illustrating an RRC connection reconfiguration process.
FIG. 7 is a diagram illustrating an RRC connection re-establishment procedure.
FIG. 8 illustrates substates which may be owned by UE in the RRC_IDLE state and a substate transition process.
FIG. 9 shows a basic structure for ProSe.
FIG. 10 shows the deployment examples of types of UE performing ProSe direct communication and cell coverage.
FIG. 11 shows a user plane protocol stack for ProSe direct communication.
FIG. 12 shows the PC 5 interface for D2D direct discovery.
FIG. 13 illustrates a relay UE.
FIG. 14 illustrates a relation between a relay UE and a remote UE.
FIG. 15 illustrates three steps in which a remote UE selects a specific UE of candidate relay UEs as a relay UE.
FIG. 16 shows a method of selecting a relay UE which is performed by a remote UE according to an embodiment of the present invention.
FIG. 17 shows an implementation example in which the high layer of a remote UE finally selects a relay UE.
FIG. 18 illustrates a method of the AS layer of a remote UE finally performing the selection of a relay UE.
FIG. 19 is a block diagram illustrating a terminal in which an embodiment of the present invention is implemented.

[Mode for Invention]

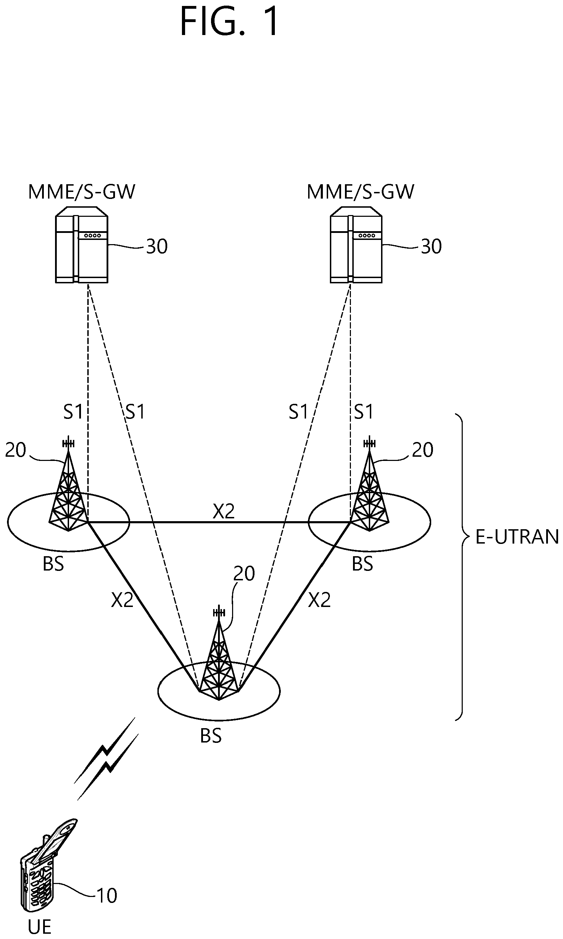

FIG. 1 shows a wireless communication system to which the present invention is applied. The wireless communication system may also be referred to as an evolved-UMTS terrestrial radio access network (E-UTRAN) or a long term evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

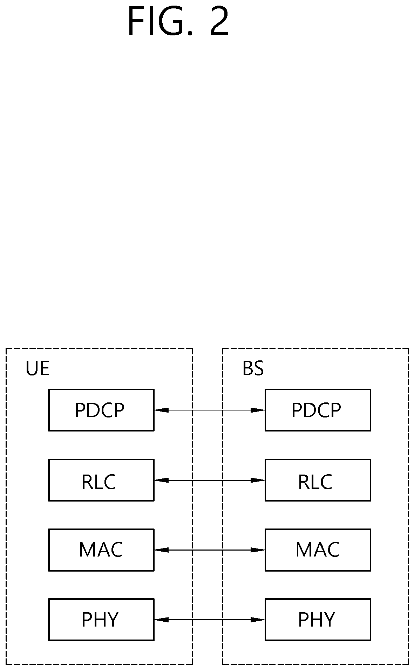

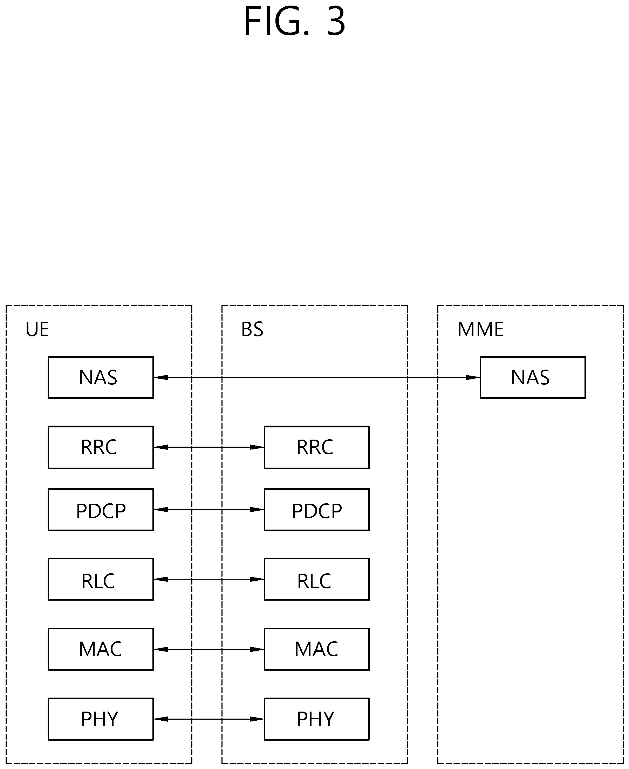

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

The RRC state of UE and an RRC connection method are described below.

The RRC state means whether or not the RRC layer of UE is logically connected to the RRC layer of the E-UTRAN. A case where the RRC layer of UE is logically connected to the RRC layer of the E-UTRAN is referred to as an RRC connected state. A case where the RRC layer of UE is not logically connected to the RRC layer of the E-UTRAN is referred to as an RRC idle state. The E-UTRAN may check the existence of corresponding UE in the RRC connected state in each cell because the UE has RRC connection, so the UE may be effectively controlled. In contrast, the E-UTRAN is unable to check UE in the RRC idle state, and a Core Network (CN) manages UE in the RRC idle state in each tracking area, that is, the unit of an area greater than a cell. That is, the existence or non-existence of UE in the RRC idle state is checked only for each large area. Accordingly, the UE needs to shift to the RRC connected state in order to be provided with common mobile communication service, such as voice or data.

When a user first powers UE, the UE first searches for a proper cell and remains in the RRC idle state in the corresponding cell. The UE in the RRC idle state establishes RRC connection with an E-UTRAN through an RRC connection procedure when it is necessary to set up the RRC connection, and shifts to the RRC connected state. A case where UE in the RRC idle state needs to set up RRC connection includes several cases. For example, the cases may include a need to send uplink data for a reason, such as a call attempt by a user, and to send a response message as a response to a paging message received from an E-UTRAN.

A Non-Access Stratum (NAS) layer placed over the RRC layer performs functions, such as session management and mobility management.

In the NAS layer, in order to manage the mobility of UE, two types of states: EPS Mobility Management-REGISTERED (EMM-REGISTERED) and EMM-DEREGISTERED are defined. The two states are applied to UE and the MME. UE is initially in the EMM-DEREGISTERED state. In order to access a network, the UE performs a process of registering it with the corresponding network through an initial attach procedure. If the attach procedure is successfully performed, the UE and the MME become the EMM-REGISTERED state.

In order to manage signaling connection between UE and the EPC, two types of states: an EPS Connection Management (ECM)-IDLE state and an ECM-CONNECTED state are defined. The two states are applied to UE and the MME. When the UE in the ECM-IDLE state establishes RRC connection with the E-UTRAN, the UE becomes the ECM-CONNECTED state. The MME in the ECM-IDLE state becomes the ECM-CONNECTED state when it establishes S1 connection with the E-UTRAN. When the UE is in the ECM-IDLE state, the E-UTRAN does not have information about the context of the UE. Accordingly, the UE in the ECM-IDLE state performs procedures related to UE-based mobility, such as cell selection or cell reselection, without a need to receive a command from a network. In contrast, when the UE is in the ECM-CONNECTED state, the mobility of the UE is managed in response to a command from a network. If the location of the UE in the ECM-IDLE state is different from a location known to the network, the UE informs the network of its corresponding location through a tracking area update procedure.

System information is described below.

System information includes essential information that needs to be known by UE in order for the UE to access a BS. Accordingly, the UE needs to have received all pieces of system information before accessing the BS, and needs to always have the up-to-date system information. Furthermore, the BS periodically transmits the system information because the system information is information that needs to be known by all UEs within one cell. The system information is divided into a Master Information Block (MIB) and a plurality of System Information Blocks (SIBs).

The MIB may include the limited number of parameters which are the most essential and are most frequently transmitted in order to obtain other information from a cell. UE first discovers an MIB after downlink synchronization. The MIB may include information, such as a downlink channel bandwidth, a PHICH configuration, an SFN supporting synchronization and operating as a timing reference, and an eNB transmission antenna configuration. The MIB may be broadcasted on a BCH.

SystemInformationBlockType1 (SIB1) of included SIBs is included in a "SystemInformationBlockType1" message and transmitted. Other SIBs other than the SIB1 are included in a system information message and transmitted. The mapping of the SIBs to the system information message may be flexibly configured by a scheduling information list parameter included in the SIB1. In this case, each SIB is included in a single system information message. Only SIBs having the same scheduling required value (e.g. period) may be mapped to the same system information message. Furthermore, SystemInformationBlockType2 (SIB2) is always mapped to a system information message corresponding to the first entry within the system information message list of a scheduling information list. A plurality of system information messages may be transmitted within the same period. The SIB1 and all of the system information messages are transmitted on a DL-SCH.

In addition to broadcast transmission, in the E-UTRAN, the SIB1 may be channel-dedicated signaling including a parameter set to have the same value as an existing set value. In this case, the SIB1 may be included in an RRC connection re-establishment message and transmitted.

The SIB1 includes information related to UE cell access and defines the scheduling of other SIBs. The SIB1 may include information related to the PLMN identifiers, Tracking Area Code (TAC), and cell ID of a network, a cell barring state indicative of whether a cell is a cell on which UE can camp, a required minimum reception level within a cell which is used as a cell reselection reference, and the transmission time and period of other SIBs.

The SIB2 may include radio resource configuration information common to all types of UE. The SIB2 may include information related to an uplink carrier frequency and uplink channel bandwidth, an RACH configuration, a page configuration, an uplink power control configuration, a sounding reference signal configuration, a PUCCH configuration supporting ACK/NACK transmission, and a PUSCH configuration.

UE may apply a procedure for obtaining system information and for detecting a change of system information to only a PCell. In an SCell, when the corresponding SCell is added, the E-UTRAN may provide all types of system information related to an RRC connection state operation through dedicated signaling. When system information related to a configured SCell is changed, the E-UTRAN may release a considered SCell and add the considered SCell later. This may be performed along with a single RRC connection re-establishment message. The E-UTRAN may set a value broadcast within a considered SCell and other parameter value through dedicated signaling.

UE needs to guarantee the validity of a specific type of system information. Such system information is called required system information. The required system information may be defined as follows.

- If UE is in the RRC_IDLE state: the UE needs to have the valid version of the MIB and the SIB1 in addition to the SIB2 to SIB8. This may comply with the support of a considered RAT.
- If UE is in the RRC connection state: the UE needs to have the valid version of the MIB, SIB1, and SIB2.

In general, the validity of system information may be guaranteed up to a maximum of 3 hours after being obtained.

In general, service that is provided to UE by a network may be classified into three types as follows. Furthermore, the UE differently recognizes the type of cell depending on what service may be provided to the UE. In the following description, a service type is first described, and the type of cell is described.

1) Limited service: this service provides emergency calls and an Earthquake and Tsunami Warning System (ETWS), and may be provided by an acceptable cell.
2) Suitable service: this service means public service for common uses, and may be provided by a suitable cell (or a normal cell).
3) Operator service: this service means service for communication network operators. This cell may be used by only communication network operators, but may not be used by common users.

In relation to a service type provided by a cell, the type of cell may be classified as follows.

1) An acceptable cell: this cell is a cell from which UE may be provided with limited service. This cell is a cell that has not been barred from a viewpoint of corresponding UE and that satisfies the cell selection criterion of the UE.
2) A suitable cell: this cell is a cell from which UE may be provided with suitable service. This cell satisfies the conditions of an acceptable cell and also satisfies additional conditions. The additional conditions include that the suitable cell needs to belong to a Public Land Mobile Network (PLMN) to which corresponding UE may access and that the suitable cell is a cell on which the execution of a tracking area update procedure by the UE is not barred. If a corresponding cell is a CSG cell, the cell needs to be a cell to which UE may access as a member of the CSG.
3) A barred cell: this cell is a cell that broadcasts information indicative of a barred cell through system information.
4) A reserved cell: this cell is a cell that broadcasts information indicative of a reserved cell through system information.

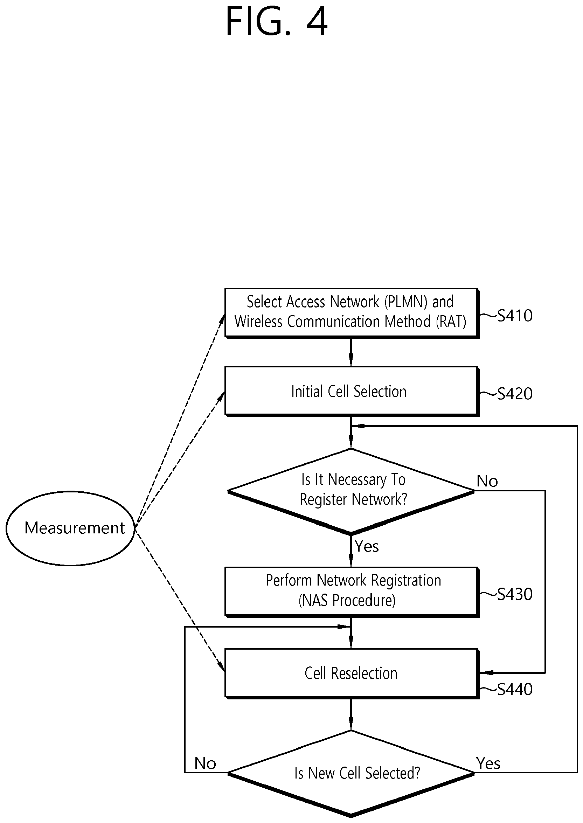

FIG. 4 is a flowchart illustrating the operation of UE in the RRC idle state. FIG. 4 illustrates a procedure in which UE that is initially powered on experiences a cell selection process, registers it with a network, and then performs cell reselection if necessary.

Referring to FIG. 4, the UE selects Radio Access Technology (RAT) in which the UE communicates with a Public Land Mobile Network (PLMN), that is, a network from which the UE is provided with service (S410). Information about the PLMN and the RAT may be selected by the user of the UE, and the information stored in a Universal Subscriber Identity Module (USIM) may be used.

The UE selects a cell that has the greatest value and that belongs to cells having measured BS and signal intensity or quality greater than a specific value (cell selection) (S420). In this case, the UE that is powered off performs cell selection, which may be called initial cell selection. A cell selection procedure is described later in detail. After the cell selection, the UE receives system information periodically by the BS. The specific value refers to a value that is defined in a system in order for the quality of a physical signal in data transmission/reception to be guaranteed. Accordingly, the specific value may differ depending on applied RAT.

If network registration is necessary, the UE performs a network registration procedure (S430). The UE registers its information (e.g., an IMSI) with the network in order to receive service (e.g., paging) from the network. The UE does not register it with a network whenever it selects a cell, but registers it with a network when information about the network (e.g., a Tracking Area Identity (TAI)) included in system information is different from information about the network that is known to the UE.

The UE performs cell reselection based on a service environment provided by the cell or the environment of the UE (S440). If the value of the intensity or quality of a signal measured based on a BS from which the UE is provided with service is lower than that measured based on a BS of a neighboring cell, the UE selects a cell that belongs to other cells and that provides better signal characteristics than the cell of the BS that is accessed by the UE. This process is called cell reselection differently from the initial cell selection of the No. 2 process. In this case, temporal restriction conditions are placed in order for a cell to be frequently reselected in response to a change of signal characteristic. A cell reselection procedure is described later in detail.

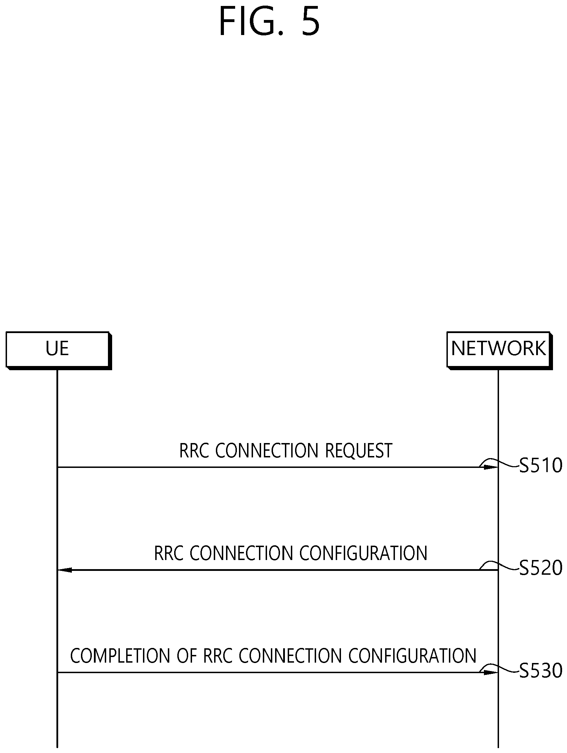

FIG. 5 is a flowchart illustrating a process of establishing RRC connection.

UE sends an RRC connection request message that requests RRC connection to a network (S510). The network sends an RRC connection establishment message as a response to the RRC connection request (S520). After receiving the RRC connection establishment message, the UE enters RRC connected mode.

The UE sends an RRC connection establishment complete message used to check the successful completion of the RRC connection to the network (S530).

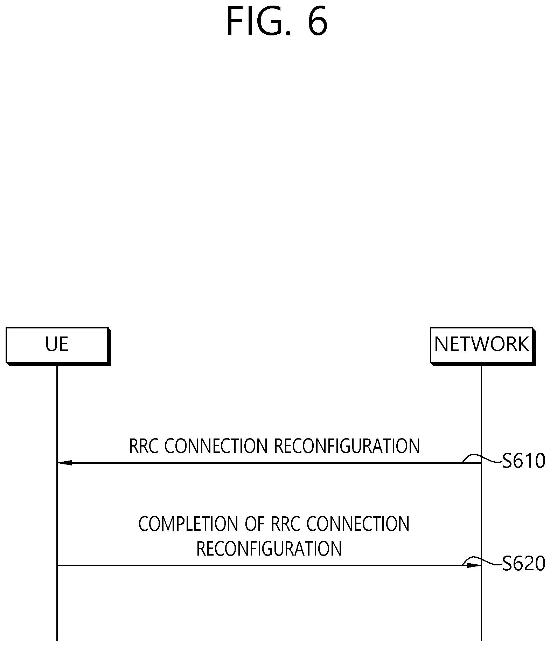

FIG. 6 is a flowchart illustrating an RRC connection reconfiguration process. An RRC connection reconfiguration is used to modify RRC connection. This is used to establish/modify/release RBs, perform handover, and set up/modify/release measurements.

A network sends an RRC connection reconfiguration message for modifying RRC connection to UE (S610). As a response to the RRC connection reconfiguration message, the UE sends an RRC connection reconfiguration complete message used to check the successful completion of the RRC connection reconfiguration to the network (S620).

Hereinafter, a public land mobile network (PLMN) is described.

The PLMN is a network which is disposed and operated by a mobile network operator. Each mobile network operator operates one or more PLMNs. Each PLMN may be identified by a Mobile Country Code (MCC) and a Mobile Network Code (MNC). PLMN information of a cell is included in system information and broadcasted.

In PLMN selection, cell selection, and cell reselection, various types of PLMNs may be considered by the terminal.

Home PLMN (HPLMN): PLMN having MCC and MNC matching with MCC and MNC of a terminal IMSI.

Equivalent HPLMN (EHPLMN): PLMN serving as an equivalent of an HPLMN.

Registered PLMN (RPLMN): PLMN successfully finishing location registration.

Equivalent PLMN (EPLMN): PLMN serving as an equivalent of an RPLMN.

Each mobile service consumer subscribes in the HPLMN. When a general service is provided to the terminal through the HPLMN or the EHPLMN, the terminal is not in a roaming state. Meanwhile, when the service is provided to the terminal through a PLMN except for the HPLMN/EHPLMN, the terminal is in the roaming state. In this case, the PLMN refers to a Visited PLMN (VPLMN).

When UE is initially powered on, the UE searches for available Public Land Mobile Networks (PLMNs) and selects a proper PLMN from which the UE is able to be provided with service. The PLMN is a network that is deployed or operated by a mobile network operator. Each mobile network operator operates one or more PLMNs. Each PLMN may be identified by Mobile Country Code (MCC) and Mobile Network Code (MNC). Information about the PLMN of a cell is included in system information and broadcasted. The UE attempts to register it with the selected PLMN. If registration is successful, the selected PLMN becomes a Registered PLMN (RPLMN). The network may signalize a PLMN list to the UE. In this case, PLMNs included in the PLMN list may be considered to be PLMNs, such as RPLMNs. The UE registered with the network needs to be able to be always reachable by the network. If the UE is in the ECM-CONNECTED state (identically the RRC connection state), the network recognizes that the UE is being provided with service. If the UE is in the ECM-IDLE state (identically the RRC idle state), however, the situation of the UE is not valid in an eNB, but is stored in the MME. In such a case, only the MME is informed of the location of the UE in the ECM-IDLE state through the granularity of the list of Tracking Areas (TAs). A single TA is identified by a Tracking Area Identity (TAI) formed of the identifier of a PLMN to which the TA belongs and Tracking Area Code (TAC) that uniquely expresses the TA within the PLMN.

Thereafter, the UE selects a cell that belongs to cells provided by the selected PLMN and that has signal quality and characteristics on which the UE is able to be provided with proper service.

The following is a detailed description of a procedure of selecting a cell by a terminal in a prior art.

When power is turned-on or the terminal is located in a cell, the terminal performs procedures for receiving a service by selecting/reselecting a suitable quality cell.

A terminal in an RRC idle state should prepare to receive a service through the cell by always selecting a suitable quality cell. For example, a terminal where power is turned-on just before should select the suitable quality cell to be registered in a network. If the terminal in an RRC connection state enters in an RRC idle state, the terminal should selects a cell for stay in the RRC idle state. In this way, a procedure of selecting a cell satisfying a certain condition by the terminal in order to be in a service idle state such as the RRC idle state refers to cell selection. Since the cell selection is performed in a state that a cell in the RRC idle state is not currently determined, it is important to select the cell as rapid as possible. Accordingly, if the cell provides a wireless signal quality of a predetermined level or greater, although the cell does not provide the best wireless signal quality, the cell may be selected during a cell selection procedure of the terminal.

A method and a procedure of selecting a cell by a terminal in a 3GPP LTE is described with reference to 3GPP TS 36.304 V8.5.0 (2009-03) "User Equipment (UE) procedures in idle mode (Release 8)".

A cell selection process is basically divided into two types.

The first is an initial cell selection process. In this process, UE does not have preliminary information about a wireless channel. Accordingly, the UE searches for all wireless channels in order to find out a proper cell. The UE searches for the strongest cell in each channel. Thereafter, if the UE has only to search for a suitable cell that satisfies a cell selection criterion, the UE selects the corresponding cell.

Next, the UE may select the cell using stored information or using information broadcasted by the cell. Accordingly, cell selection may be fast compared to an initial cell selection process. If the UE has only to search for a cell that satisfies the cell selection criterion, the UE selects the corresponding cell. If a suitable cell that satisfies the cell selection criterion is not retrieved though such a process, the UE performs an initial cell selection process.

The cell selection criterion may be defined as below equation 1.

[Equation 1]

$$Srxlev > 0 \quad AND \quad Squal > 0$$
$$where:$$
$$Srxlev = Q_{rxlevmeas} - (Q_{rxlevmin} + Q_{rxlevminoffset}) - Pcompensation$$
$$Squal = Q_{qualmeas} - (Q_{qualmin} + Q_{qualminoffset})$$

Here, the variables in the equation 1 may be defined as below table 1.

[Table 1]

| Srxlev | Cell selection RX level value (dB) |
|---|---|
| Squal | Cell selection quality value (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm) |
| $Q_{qualmin}$ | Minimum required quality level in the cell (dB) |
| $Q_{rxlevminoffset}$ | Offset to the signalled $Q_{rxlevmin}$ taken into account in the Srxlev evaluation as a result of a periodic search for a higher priority PLMN while camped normally in a VPLMN |
| $Q_{qualminoffset}$ | Offset to the signalled $Q_{qualmin}$ taken into account in the Squal evaluation as a result of a periodic search for a higher priority PLMN while camped normally in a VPLMN |
| Pcompensation | max($P_{EMAX}$-$P_{PowerClass}$, 0) (dB) |
| $P_{EMAX}$ | Maximum TX power level an UE may use when transmitting on the uplink in the cell (dBm) defined as $P_{EMAX}$ in [TS 36.101] |
| $P_{PowerClass}$ | Maximum RF output power of the UE (dBm) according to the UE power class as defined in [TS 36.101] |

Signalled values, i.e., $Q_{rxlevminoffset}$ and $Q_{qualminoffset}$, may be applied to a case where cell selection is evaluated as a result of periodic search for a higher priority PLMN during a UE camps on a normal cell in a VPLMN. During the periodic search for the higher priority PLMN as described above, the UE may perform the cell selection evaluation by using parameter values stored in other cells of the higher priority PLMN.

After the UE selects a specific cell through the cell selection process, the intensity or quality of a signal between the UE and a BS may be changed due to a change in the mobility or wireless environment of the UE. Accordingly, if the quality of the selected cell is deteriorated, the UE may select another cell that provides better quality. If a cell is reselected as described above, the UE selects a cell that provides better signal quality than the currently selected cell. Such a process is called cell reselection. In general, a basic object of the cell reselection process is to select a cell that provides UE with the best quality from a viewpoint of the quality of a radio signal.

In addition to the viewpoint of the quality of a radio signal, a network may determine priority corresponding to each frequency, and may inform the UE of the determined priorities. The UE that has received the priorities preferentially takes into consideration the priorities in a cell reselection process compared to a radio signal quality criterion.

As described above, there is a method of selecting or reselecting a cell according to the signal characteristics of a wireless environment. In selecting a cell for reselection when a cell is reselected, the following cell reselection methods may be present according to the RAT and frequency characteristics of the cell.

- Intra-frequency cell reselection: UE reselects a cell having the same center frequency as that of RAT, such as a cell on which the UE camps on.
- Inter-frequency cell reselection: UE reselects a cell having a different center frequency from that of RAT, such as a cell on which the UE camps on
- Inter-RAT cell reselection: UE reselects a cell that uses RAT different from RAT on which the UE camps

The principle of a cell reselection process is as follows.

First, UE measures the quality of a serving cell and neighbor cells for cell reselection.

Second, cell reselection is performed based on a cell reselection criterion. The cell reselection criterion has the following characteristics in relation to the measurements of a serving cell and neighbor cells.

Intra-frequency cell reselection is basically based on ranking. Ranking is a task for defining a criterion value for evaluating cell reselection and numbering cells using criterion values according to the size of the criterion values. A cell having the best criterion is commonly called the best-ranked cell. The cell criterion value is based on the value of a corresponding cell measured by UE, and may be a value to which a frequency offset or cell offset has been applied, if necessary.

Inter-frequency cell reselection is based on frequency priority provided by a network. UE attempts to camp on a frequency having the highest frequency priority. A network may provide frequency priority that will be applied by UEs within a cell in common through broadcasting signaling, or may provide frequency-specific priority to each UE through UE-dedicated signaling. A cell reselection priority provided through broadcast signaling may refer to a common priority. A cell reselection priority for each terminal set by a network may refer to a dedicated priority. If receiving the dedicated priority, the terminal may receive a valid time associated with the dedicated priority together. If receiving the dedicated priority, the terminal starts a validity timer set as the received valid time together therewith. While the valid timer is operated, the terminal applies the dedicated priority in the RRC idle mode. If the valid timer is expired, the terminal discards the dedicated priority and again applies the common priority.

For the inter-frequency cell reselection, a network may provide UE with a parameter (e.g., a frequency-specific offset) used in cell reselection for each frequency.

For the intra-frequency cell reselection or the inter-frequency cell reselection, a network may provide UE with a Neighboring Cell List (NCL) used in cell reselection. The NCL includes a cell-specific parameter (e.g., a cell-specific offset) used in cell reselection.

For the intra-frequency or inter-frequency cell reselection, a network may provide UE with a cell reselection black list used in cell reselection. The UE does not perform cell reselection on a cell included in the black list.

Ranking performed in a cell reselection evaluation process is described below.

A ranking criterion used to apply priority to a cell is defined as in Equation 1.

[Equation 2]

$$R_s = Q_{meas,s} + Q_{hyst}, \quad R_n = Q_{meas,s} - Q_{offset}$$

In this case, Rs is the ranking criterion of a serving cell, Rn is the ranking criterion of a neighbor cell, Qmeas,s is the quality value of the serving cell measured by UE, Qmeas,n is the quality value of the neighbor cell measured by UE, Qhyst is the hysteresis value for ranking, and Qoffset is an offset between the two cells.

In Intra-frequency, if UE receives an offset "Qoffsets,n" between a serving cell and a neighbor cell, Qoffset=Qoffsets,n. If UE does not Qoffsets,n, Qoffset = 0.

In Inter-frequency, if UE receives an offset "Qoffsets,n" for a corresponding cell, Qoffset = Qoffsets,n + Qfrequency. If UE does not receive "Qoffsets,n", Qoffset = Qfrequency.

If the ranking criterion Rs of a serving cell and the ranking criterion Rn of a neighbor cell are changed in a similar state, ranking priority is frequency changed as a result of the change, and UE may alternately reselect the twos. Qhyst is a parameter that gives hysteresis to cell reselection so that UE is prevented from to alternately reselecting two cells.

UE measures RS of a serving cell and Rn of a neighbor cell according to the above equation, considers a cell having the greatest ranking criterion value to be the best-ranked cell, and reselects the cell.

In accordance with the criterion, it may be checked that the quality of a cell is the most important criterion in cell reselection. If a reselected cell is not a suitable cell, UE excludes a corresponding frequency or a corresponding cell from the subject of cell reselection.

A Radio Link Failure (RLF) is described below.

UE continues to perform measurements in order to maintain the quality of a radio link with a serving cell from which the UE receives service. The UE determines whether or not communication is impossible in a current situation due to the deterioration of the quality of the radio link with the serving cell. If communication is almost impossible because the quality of the serving cell is too low, the UE determines the current situation to be an RLF.

If the RLF is determined, the UE abandons maintaining communication with the current serving cell, selects a new cell through cell selection (or cell reselection) procedure, and attempts RRC connection re-establishment with the new cell.

In the specification of 3GPP LTE, the following examples are taken as cases where normal communication is impossible.

- A case where UE determines that there is a serious problem in the quality of a downlink communication link (a case where the quality of a PCell is determined to be low while performing RLM) based on the radio quality measured results of the PHY layer of the UE
- A case where uplink transmission is problematic because a random access procedure continues to fail in the MAC sublayer.
- A case where uplink transmission is problematic because uplink data transmission continues to fail in the RLC sublayer.
- A case where handover is determined to have failed.
- A case where a message received by UE does not pass through an integrity check.

An RRC connection re-establishment procedure is described in more detail below.

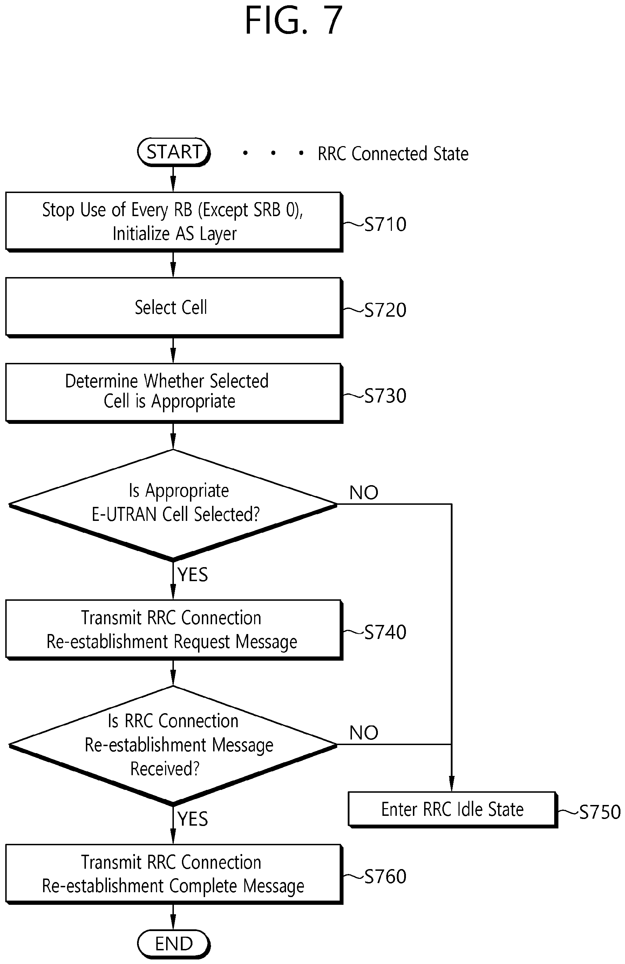

FIG. 7 is a diagram illustrating an RRC connection re-establishment procedure.

Referring to FIG. 7, UE stops using all the radio bearers that have been configured other than a Signaling Radio Bearer (SRB) #0, and initializes a variety of kinds of sublayers of an Access Stratum (AS) (S710). Furthermore, the UE configures each sublayer and the PHY layer as a default configuration. In this process, the UE maintains the RRC connection state.

The UE performs a cell selection procedure for performing an RRC connection reconfiguration procedure (S720). The cell selection procedure of the RRC connection re-establishment procedure may be performed in the same manner as the cell selection procedure that is performed by the UE in the RRC idle state, although the UE maintains the RRC connection state.

After performing the cell selection procedure, the UE determines whether or not a corresponding cell is a suitable cell by checking the system information of the corresponding cell (S730). If the selected cell is determined to be a suitable E-UTRAN cell, the UE sends an RRC connection re-establishment request message to the corresponding cell (S740).

Meanwhile, if the selected cell is determined to be a cell that uses RAT different from that of the E-UTRAN through the cell selection procedure for performing the RRC connection re-establishment procedure, the UE stops the RRC connection re-establishment procedure and enters the RRC idle state (S750).

The UE may be implemented to finish checking whether the selected cell is a suitable cell through the cell selection procedure and the reception of the system information of the selected cell. To this end, the UE may drive a timer when the RRC connection re-establishment procedure is started. The timer may be stopped if it is determined that the UE has selected a suitable cell. If the timer expires, the UE may consider that the RRC connection re-establishment procedure has failed, and may enter the RRC idle state. Such a timer is hereinafter called an RLF timer. In LTE spec TS 36.331, a timer named "T311" may be used as an RLF timer. The UE may obtain the set value of the timer from the system information of the serving cell.

If an RRC connection re-establishment request message is received from the UE and the request is accepted, a cell sends an RRC connection re-establishment message to the UE.

The UE that has received the RRC connection re-establishment message from the cell reconfigures a PDCP sublayer and an RLC sublayer with an SRB1. Furthermore, the UE calculates various key values related to security setting, and reconfigures a PDCP sublayer responsible for security as the newly calculated security key values. Accordingly, the SRB 1 between the UE and the cell is open, and the UE and the cell may exchange RRC control messages. The UE completes the restart of the SRB1, and sends an RRC connection re-establishment complete message indicative of that the RRC connection re-establishment procedure has been completed to the cell (S760).

In contrast, if the RRC connection re-establishment request message is received from the UE and the request is not accepted, the cell sends an RRC connection re-establishment reject message to the UE.

If the RRC connection re-establishment procedure is successfully performed, the cell and the UE perform an RRC connection reconfiguration procedure. Accordingly, the UE recovers the state prior to the execution of the RRC connection re-establishment procedure, and the continuity of service is guaranteed to the upmost.

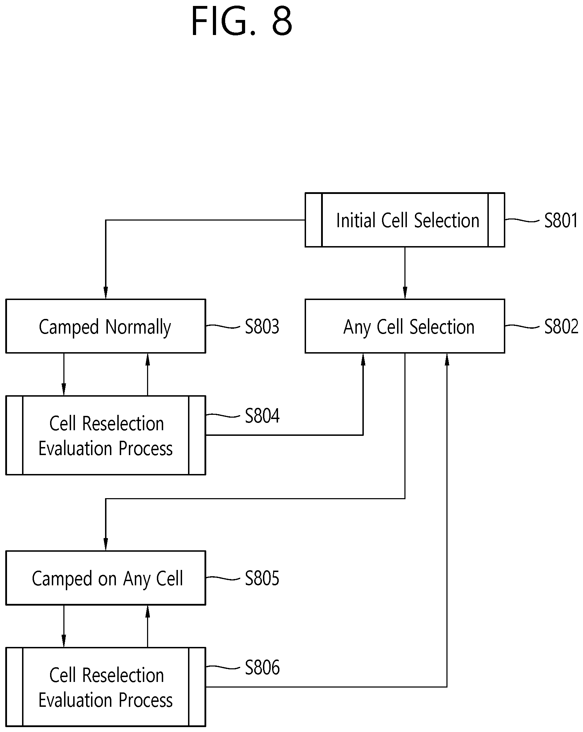

FIG. 8 illustrates substates which may be owned by UE in the RRC_IDLE state and a substate transition process.

Referring to FIG. 8, UE performs an initial cell selection process (S801). The initial cell selection process may be performed when there is no cell information stored with respect to a PLMN or if a suitable cell is not discovered.

If a suitable cell is unable to be discovered in the initial cell selection process, the UE transits to any cell selection state (S802). The any cell selection state is the state in which the UE has not camped on a suitable cell and an acceptable cell and is the state in which the UE attempts to discover an acceptable cell of a specific PLMN on which the UE may camp. If the UE has not discovered any cell on which it may camp, the UE continues to stay in the any cell selection state until it discovers an acceptable cell.

If a suitable cell is discovered in the initial cell selection process, the UE transits to a normal camp state (S803). The normal camp state refers to the state in which the UE has camped on the suitable cell. In this state, the UE may select and monitor a paging channel based on information provided through system information and may perform an evaluation process for cell reselection.

If a cell reselection evaluation process (S804) is caused in the normal camp state (S803), the UE performs a cell reselection evaluation process (S804). If a suitable cell is discovered in the cell reselection evaluation process (S804), the UE transits to the normal camp state (S803) again.

If an acceptable cell is discovered in the any cell selection state (S802), the UE transmits to any cell camp state (S805). The any cell camp state is the state in which the UE has camped on the acceptable cell.

In the any cell camp state (S805), the UE may select and monitor a paging channel based on information provided through system information and may perform the evaluation process (S806) for cell reselection. If an acceptable cell is not discovered in the evaluation process (S806) for cell reselection, the UE transits to the any cell selection state (S802).

Now, a device-to-device (D2D) operation is described. In 3GPP LTE-A, a service related to the D2D operation is called a proximity service (ProSe). Now, the ProSe is described. Hereinafter, the ProSe is the same concept as the D2D operation, and the ProSe and the D2D operation may be used without distinction.

The ProSe includes ProSe direction communication and ProSe direct discovery. The ProSe direct communication is communication performed between two or more proximate UEs. The UEs may perform communication by using a protocol of a user plane. A ProSe-enabled UE implies a UE supporting a procedure related to a requirement of the ProSe. Unless otherwise specified, the ProSe-enabled UE includes both of a public safety UE and a non-public safety UE. The public safety UE is a UE supporting both of a function specified for a public safety and a ProSe procedure, and the non-public safety UE is a UE supporting the ProSe procedure and not supporting the function specified for the public safety.

ProSe direct discovery is a process for discovering another ProSe-enabled UE adjacent to ProSe-enabled UE. In this case, only the capabilities of the two types of ProSe-enabled UE are used. EPC-level ProSe discovery means a process for determining, by an EPC, whether the two types of ProSe-enabled UE are in proximity and notifying the two types of ProSe-enabled UE of the proximity.

Hereinafter, for convenience, the ProSe direct communication may be referred to as D2D communication, and the ProSe direct discovery may be referred to as D2D discovery.

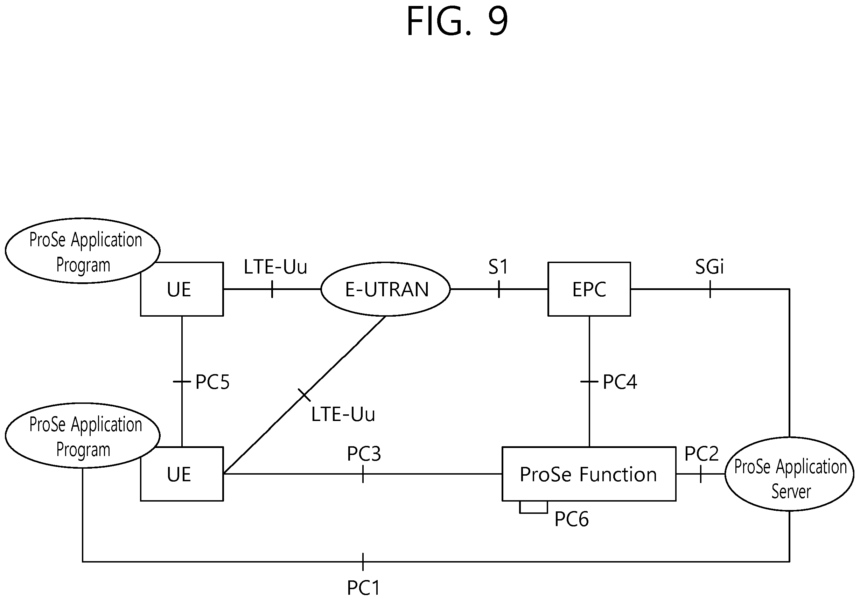

FIG. 9 shows a basic structure for ProSe.

Referring to FIG. 9, the basic structure for ProSe includes an E-UTRAN, an EPC, a plurality of types of UE including a ProSe application program, a ProSe application server (a ProSe APP server), and a ProSe function.

The EPC represents an E-UTRAN core network configuration. The EPC may include an MME, an S-GW, a P-GW, a policy and charging rules function (PCRF), a home subscriber server (HSS) and so on.

The ProSe APP server is a user of a ProSe capability for producing an application function. The ProSe APP server may communicate with an application program within UE. The application program within UE may use a ProSe capability for producing an application function.

The ProSe function may include at least one of the followings, but is not necessarily limited thereto.

- Interworking via a reference point toward the 3rd party applications
- Authorization and configuration of UE for discovery and direct communication
- Enable the functionality of EPC level ProSe discovery
- ProSe related new subscriber data and handling of data storage, and also handling of the ProSe identities
- Security related functionality
- Provide control towards the EPC for policy related functionality
- Provide functionality for charging (via or outside of the EPC, e.g., offline charging)

A reference point and a reference interface in the basic structure for ProSe are described below.

- PC1: a reference point between the ProSe application program within the UE and the ProSe application program within the ProSe APP server. This is used to define signaling requirements in an application dimension.
- PC2: a reference point between the ProSe APP server and the ProSe function. This is used to define an interaction between the ProSe APP server and the ProSe function. The update of application data in the ProSe database of the ProSe function may be an example of the interaction.
- PC3: a reference point between the UE and the ProSe function. This is used to define an interaction between the UE and the ProSe function. A configuration for ProSe discovery and communication may be an example of the interaction.
- PC4: a reference point between the EPC and the ProSe function. This is used to define an interaction between the EPC and the ProSe function. The interaction may illustrate the time when a path for 1:1 communication between types of UE is set up or the time when ProSe service for real-time session management or mobility management is authenticated.
- PC5: a reference point used for using control/user plane for discovery and communication, relay, and 1:1 communication between types of UE.
- PC6: a reference point for using a function, such as ProSe discovery, between users belonging to different PLMNs.
- SGi: this may be used to exchange application data and types of application dimension control information.

< ProSe Direct Communication>

ProSe direct communication is communication mode in which two types of public safety UE can perform direct communication through a PC 5 interface. Such communication mode may be supported when UE is supplied with services within coverage of an E-UTRAN or when UE deviates from coverage of an E-UTRAN.

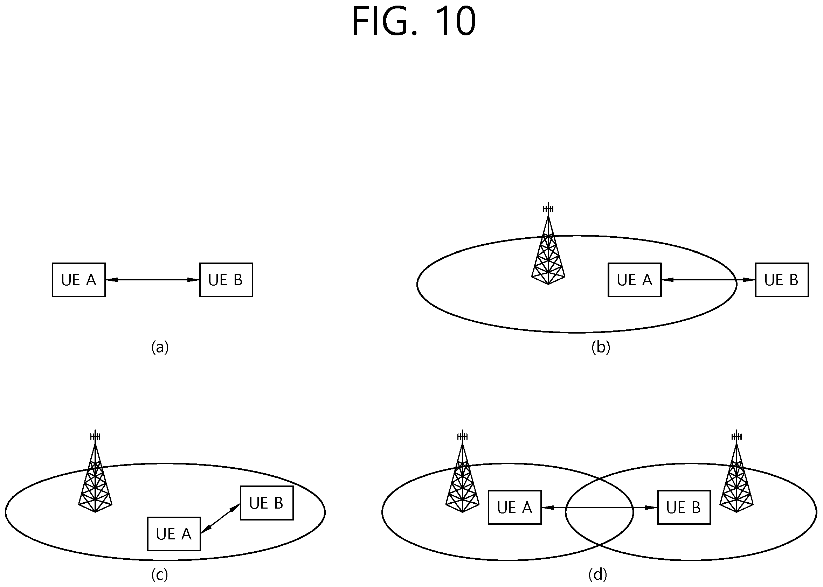

FIG. 10 shows the deployment examples of types of UE performing ProSe direct communication and cell coverage.
Referring to FIG. 10(a), types of UE A and B may be placed outside cell coverage. Referring to FIG. 10(b), UE A may be placed within cell coverage, and UE B may be placed outside cell coverage. Referring to FIG. 10(c), types of UE A and B may be placed within single cell coverage. Referring to FIG. 10(d), UE A may be placed within coverage of a first cell, and UE B may be placed within coverage of a second cell.
ProSe direct communication may be performed between types of UE placed at various positions as in FIG. 10.
Meanwhile, the following IDs may be used in ProSe direct communication.
A source layer-2 ID: this ID identifies the sender of a packet in the PC 5 interface.
A destination layer-2 ID: this ID identifies the target of a packet in the PC 5 interface.
An SA L1 ID: this ID is the ID of scheduling assignment (SA) in the PC 5 interface.

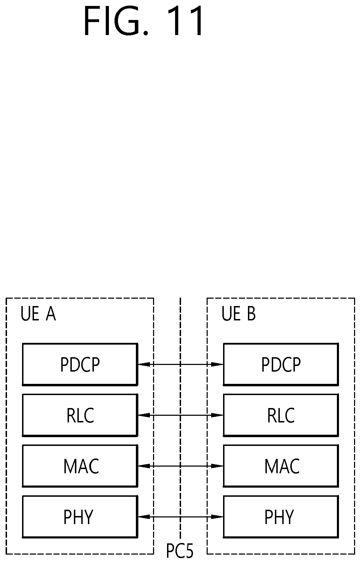

FIG. 11 shows a user plane protocol stack for ProSe direct communication.
Referring to FIG. 11, the PC 5 interface includes a PDCH, RLC, MAC, and PHY layers.
In ProSe direct communication, HARQ feedback may not be present. An MAC header may include a source layer-2 ID and a destination layer-2 ID.

<Radio resource assignment for ProSe direct communication>

ProSe-enabled UE may use the following two types of mode for resource assignment for ProSe direct communication.

1. Mode 1

Mode 1 is mode in which resources for ProSe direct communication are scheduled by an eNB. UE needs to be in the RRC_CONNECTED state in order to send data in accordance with mode 1. The UE requests a transmission resource from an eNB. The eNB performs scheduling assignment and schedules resources for sending data. The UE may send a scheduling request to the eNB and send a ProSe Buffer Status Report (BSR). The eNB has data to be subjected to ProSe direct communication by the UE based on the ProSe BSR and determines that a resource for transmission is required.

2. Mode 2

Mode 2 is mode in which UE directly selects a resource. UE directly selects a resource for ProSe direct communication in a resource pool. The resource pool may be configured by a network or may have been previously determined.

Meanwhile, if UE has a serving cell, that is, if the UE is in the RRC_CONNECTED state with an eNB or is placed in a specific cell in the RRC_IDLE state, the UE is considered to be placed within coverage of the eNB.

If UE is placed outside coverage, only mode 2 may be applied. If the UE is placed within the coverage, the UE may use mode 1 or mode 2 depending on the configuration of an eNB.

If another exception condition is not present, only when an eNB performs a configuration, UE may change mode from mode 1 to mode 2 or from mode 2 to mode 1.

<ProSe direct discovery>

ProSe direct discovery refers to a procedure that is used for ProSe-enabled UE to discover another ProSe-enabled UE in proximity and is also called D2D direct discovery. In this case, E-UTRA radio signals through the PC 5 interface may be used. Information used in ProSe direct discovery is hereinafter called discovery information.

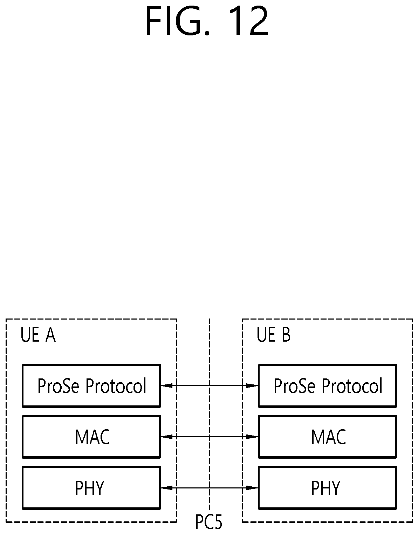

FIG. 12 shows the PC 5 interface for D2D direct discovery.

Referring to FIG. 12, the PC 5 interface includes an MAC layer, a PHY layer, and a ProSe Protocol layer, that is, a higher layer. The higher layer (the ProSe Protocol) handles the permission of the announcement and monitoring of discovery information. The contents of the discovery information are transparent to an access stratum (AS). The ProSe Protocol transfers only valid discovery information to the AS for announcement.

The MAC layer receives discovery information from the higher layer (the ProSe Protocol). An IP layer is not used to send discovery information. The MAC layer determines a resource used to announce discovery information received from the higher layer. The MAC layer produces an MAC protocol data unit (PDU) for carrying discovery information and sends the MAC PDU to the physical layer. An MAC header is not added.

In order to announce discovery information, there are two types of resource assignment.

1. Type 1

As a method in which resources for announcement of discovered information are allocated not specifically to a terminal, a base station provides a resource pool configuration for announcement of the discovered information to terminals. The configuration is included in a system information block (SIB) to be signaled by a broadcast scheme. Alternatively, the configuration may be provided while being included in a terminal specific RRC message. Alternatively, the configuration may be broadcast signaling of another layer except for an RRC message or terminal specific signaling.

The terminal autonomously selects the resource from an indicated resource pool and announces the discovery information by using the selected resource. The terminal may announce the discovery information through an arbitrarily selected resource during each discovery period.

2. Type 2

The type 2 is a method for assigning a resource for announcing discovery information in a UE-specific manner. UE in the RRC_CONNECTED state may request a resource for discovery signal announcement from an eNB through an RRC signal. The eNB may announce a resource for discovery signal announcement through an RRC signal. A resource for discovery signal monitoring may be assigned within a resource pool configured for types of UE.

An eNB 1) may announce a type 1 resource pool for discovery signal announcement to UE in the RRC_IDLE state through the SIB. Types of UE whose ProSe direct discovery has been permitted use the type 1 resource pool for discovery information announcement in the RRC_IDLE state. Alternatively, the eNB 2) announces that the eNB supports ProSe direct discovery through the SIB, but may not provide a resource for discovery information announcement. In this case, UE needs to enter the RRC_CONNECTED state for discovery information announcement.

An eNB may configure that UE has to use a type 1 resource pool for discovery information announcement or has to use a type 2 resource through an RRC signal in relation to UE in the RRC_CONNECTED state.

Hereinafter, a sidelink may mean an interface between UEs for D2D communication and D2D discovery. The sidelink corresponds to the aforementioned PC5 interface. A channel defined/used in the sidelink includes a physical sidelink control channel (PSCCH). A control channel that broadcasts the most basic system information for D2D communication includes a physical sidelink broadcast channel (PSBCH). Furthermore, a channel on which a D2D discovery signal is transmitted may be defined as a physical sidelink discovery channel (PSDCH). A D2D synchronization signal may be called a sidelink synchronization signal (SLSS) or a D2D synchronization signal (D2DSS).

In the LTE-A system (Rel-12, 13 or higher), a D2D communication UE has been configured to transmit both a PSBCH and an SLSS or to transmit an SLSS. Furthermore, in the LTE-A system, sidelink RSRP (S-RSRP) for synchronization with a different UE in D2D communication is newly defined. That is, when UEs attempt to perform D2D communication, they may measure S-RSRPs, may perform synchronization with UEs having a specific value or more, and may perform D2D communication. In this case, the S-RSRP may be measured from a demodulation reference signal (DM-RS) on a PSBCH. In this case, for a D2D relay operation, the S-RSRP may be measured from a DM-RS on a PSDCH. Meanwhile, sidelink discovery reference signal received power (SD-RSRP) may be used for a D2D relay operation. The SD-RSRP may be defined as a linear average of the power contribution of resource elements that carry a DM-RS associated with a PSDCH whose cyclic redundancy check (CRC) has been authenticated. A criterion point of the SD-RSRP may be an antenna connection part of a UE. If receive diversity is used by a UE, a value lower than SD-RSPR by an individual diversity branch may not be reported.

Furthermore, a UE out of cell coverage may determine whether it will become a synchronization source that will perform a D2D relay operation by measuring S-RSRP/SD-RSRP based on an SLSS and/or the DM-RS of a PSBCH/PSCCH/PSSCH.

Hereinafter, a D2D relay operation is simply called a relay operation, and a UE that performs a D2D relay operation is called a relay UE. A relay UE may be located between a first UE and a second UE and may relay a signal between the first and the second UEs. Alternatively, a relay UE may be located between a different UE and a network (cell/eNB) and may relay a signal between the different UE and the network. Hereinafter, it is a premise that a relay UE is a UE that relays a signal between a different UE and a network.

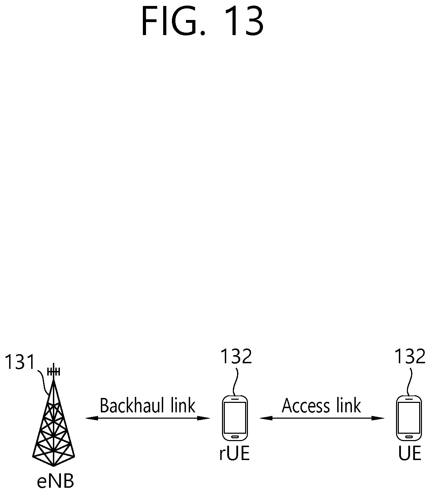

FIG. 13 illustrates a relay UE.

A relay UE 132 is a UE that provides network connectivity to a remote UE 133. The relay UE 132 functions to relay a signal between the remote UE 133 and a network 131. The remote UE 133 may be a UE that is difficult to perform direct communication with an eNB although it is located out of coverage of the eNB or in coverage of the eNB.

The relay UE maintains both a link with the eNB and a link with a common UE (e.g., a remote UE) and may transfer information received from the eNB to the common UE or transfer information received from the common UE to the eNB. In this case, a link between the eNB and the relay UE is called a backhaul link, and a link between the relay UE and the remote UE is called an access link. Furthermore, a link for direct communication between UEs without the intervention of an eNB may be defined as a D2D link or a sidelink.

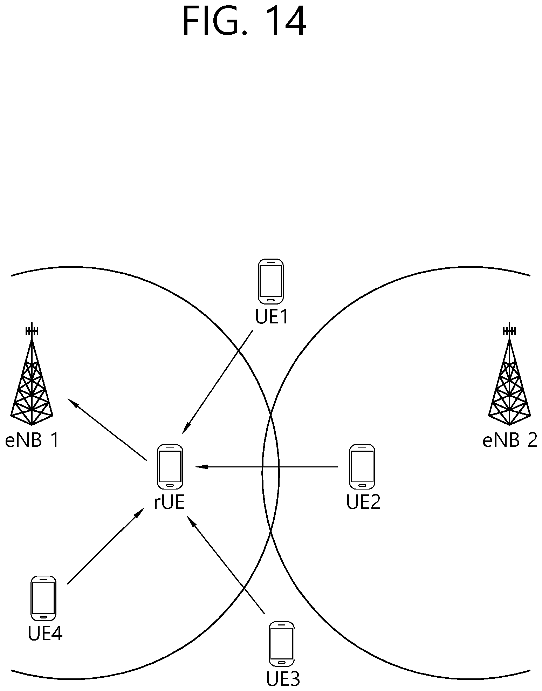

FIG. 14 illustrates a relation between a relay UE and a remote UE.

In FIG. 14, a UE1 and a UE3 are out-of-coverage UEs, and a UE2 and a UE4 are in-coverage UEs. A rUE means a relay UE configured to perform a relay operation. In this case, the UE2 corresponds to an in-coverage UE with respect to a second eNB eNB2, but may correspond to an out-of-coverage UE with respect to a first eNB. The first eNB eNB1 may become a serving cell for the rUE.

The rUE is a UE configured as an rUE according to the instruction of the first eNB eNB1 or coordination between rUEs. The rUE broadcasts a discovery signal, etc., and thus surrounding UEs may be aware of the presence of the rUE. The rUE may receive a D2D signal from a UE (i.e., the UE4) within the network of the serving cell, a UE (i.e., the UE2) within the network of a neighbor cell and out-of-coverage UEs (i.e., the UE1 and the UE3) for uplink transmission.

A process of a remote UE selecting a relay UE is described in detail below. Furthermore, an operation/process performed in the protocol layers of the remote UE when the remote UE selects the relay UE is described below.

The process of the remote UE selecting the relay UE may basically include three steps. RAN assistant information and control information of a different level may be provided in each step. The remote UE may be present in coverage of an eNB or may be present out of coverage of the eNB. A level controlled by the eNB may be influenced depending on that the remote UE is located where.

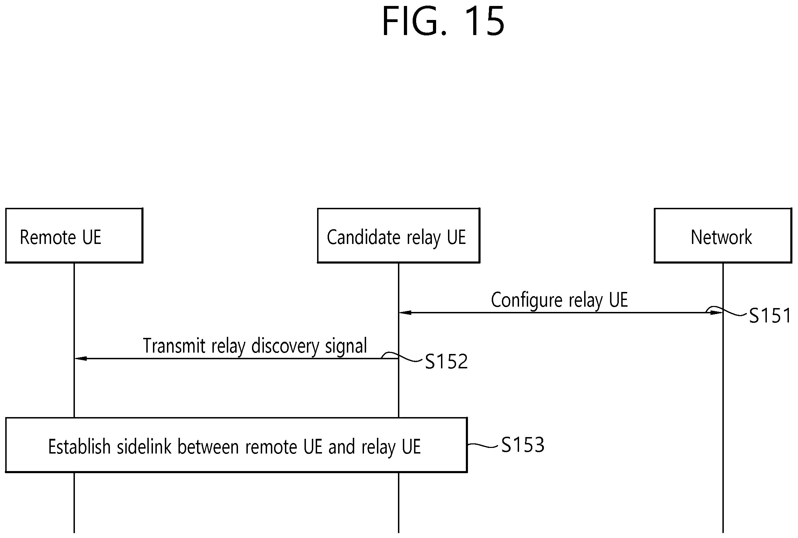

FIG. 15 illustrates three steps in which a remote UE selects a specific UE of candidate relay UEs as a relay UE.

Referring to FIG. 15, the configuration of a relay UE is performed between a candidate relay UE and a network (S151). This may be called Step 1: the configuration of the relay UE.

In order for the candidate relay UE to join a discovery operation and to perform a relay operation between the remote UE and the network, it may be necessary that the candidate relay UE is authenticated to be a UE that plays the role of a relay from the remote UE to the network. Accordingly, it may be necessary for the candidate relay UE to enter an RRC connected state and to be permitted to operate from the network (eNB) to the relay UE.

Furthermore, there are two applicable methods with respect to discovery (this is assumed to be relay discovery) transmitted by a relay UE. That is, there may be relay discovery transmission initiated from the relay UE and relay discovery transmission initiated from a remote UE. Which one of the two methods will be used may be set/controlled by an eNB.

That is, in order for the relay UE to join relay discovery and to play the role of a relay between the remote UE and the network, it may be necessary for the relay UE to enter an RRC connected state and to receive permission from the eNB.

Next, the candidate relay UE transmits a relay discovery signal to the remote UE (S152). This may be called Step 2: relay discovery assisted by the network.

In Step 2, if the remote UE is out of cell coverage, the remote UE performs evaluation on candidate relay UEs. If the remote UE is in cell coverage, to select a relay UE from the candidate relay UEs may be performed by the serving cell of the remote UE based on a measurement report received from the remote UE or the candidate relay UEs. In this case, it is assumed that the remote UE is out of cell coverage and the selection of the relay UE is performed by the remote UE.

Parameters for the connectivity (e.g., APN information) and measurement results (e.g., RSRP/RSRQ of a sidelink) of a candidate relay UE may be used for the selection criteria of a relay UE. Criteria by which a remote UE selects a relay UE include upper layer criteria and lower layer criteria, which are described in detail later. For a remote UE in cell coverage, an eNB may perform a configuration so that the remote UE initiates relay discovery.

If the remote UE has selected a specific candidate relay UE as a relay UE, a sidelink is established between the specific candidate relay UE and the remote UE (S153). This may be called Step 3: safe layer-2 link establishment through a PC5 interface.

In Step 3, a unicast connection through the PC5 interface is established between the remote UE and the relay UE. In this process, an authentication and security setting process may be included. The security aspect of this process may be processed by SA3.

From a viewpoint of an RAN, the following 4 cases may be present in relation to the mobility of a remote UE.

Case 1: if a remote UE within a cell establishes a connection with a relay UE.

Intra-E-UTRAN-access mobility support within an E-UTRAN in an ECM connection state for UEs may include a handover process and a process related to dual connectivity. In the handover process, a source eNB makes a determination/command by which a UE uses radio resources provided by a target eNB. Likewise, in the process related to dual connectivity, a master eNB (MeNB) makes a determination/command by which a UE uses radio resources provided by a secondary eNB (SeNB).

Mobility between RATs is controlled by a network, and such control is performed by a source eNB. That is, the source eNB makes a determination/command by which a UE uses the radio resources of a target RAT.

Accordingly, the mobility of the UE in the RRC connected state is based on handover according to control of the network under the help of the UE. The eNB may control the mobility using a combination of system information and a dedicated message (RRC connection re-configuration).

The relay UE that relays transmission from the remote UE to the network may be seen as a different target from a viewpoint of the remote UE. The source eNB may determine that the remote UE in the RRC connected state uses the relay UE that performs handover between RATs or relay from the remote UE to the network, and the source eNB may require measurement results for the determination.

A UE in cell coverage may be an RRC idle state or RRC connected state depending on the activation level of the UE. If the UE is in the RRC connected state, the UE is capable of the transmission/reception of data while maintaining service continuity without a loss of data through handover under the control of a network. In this aspect, a remote UE in the RRC connected state may be connected to a relay UE under the control of a network. The UE in the RRC idle state may not need to be connected to the relay UE because it does not transmit and receive data. Accordingly, it may be necessary for the UE in the RRC idle state to first enter the RRC connected state.

The degree that an eNB engages in control in selecting a relay UE within cell coverage may be various. The degree that the eNB engages in control may be divided into Levels 0, 1, 2 and 3.

Level 0: A remote UE may select a relay UE depending on its implementation. If data is no longer transmitted in the Uu interface between an eNB and the UE, a deactivation timer releases the remote UE.

Level 1: A remote UE may select a relay UE based on parameters included in system information provided by an eNB. If data is no longer transmitted in the Uu interface between the eNB and the UE, a deactivation timer releases the remote UE.

Level 2: A remote UE may select a relay UE based on parameters included in a dedicated signal provided by an eNB. If data is no longer transmitted in the Uu interface between the eNB and the UE, a deactivation timer releases the remote UE.

Level 3: A remote UE reports measurement results for a candidate relay UE that satisfy a minimum condition to an eNB. The eNB selects a relay UE from candidate relay UEs and handovers the relay UE that has selected the remote UE. The handover may be indicated using an RRC connection re-configuration message or an RRC release message.

In accordance with Level 3, there is an advantage in that maximum flexibility and consistency with a conventional operation can be maintained because a relay UE is selected by an eNB.

The minimum criteria may be 1. Connectivity provided by a relay UE must satisfy requirements provided by a high layer. 2. Sidelink measurement quality (e.g., sidelink RSRQ) performed by the remote UE by measuring a discovery signal received from a relay UE must be a set threshold or more.

Case 2: A remote UE connected to a relay UE selects and connects a different relay UE.

In this case, the remote UE may be a UE out of cell coverage. The remote UE may perform a relay UE reselection process. The relay UE reselection process may include the following three processes.

1. Connectivity and a sidelink measured value maintain a set of relay UEs (this is called a candidate set) that satisfy a minimum condition, such as that a specific threshold is not exceeded. To this end, the remote UE may use a discovery operation.

2. If a relay UE that is now connected does not satisfy the minimum condition, the relay UE that is now connected is excluded from the candidate set and a reselection process of selecting a different relay UE is triggered. A timer and/or hysteresis may be used before the relay UE that is now connected is excluded from the candidate set.

3. The relay UE reselection may be performed like one of the following methods.

a. A remote UE assigns ranking to candidate relay UEs included in a candidate set and may select a candidate relay UE having the highest ranking as a relay UE. The ranking may be assigned based on a sidelink RSRP measured value between each candidate relay UE and the remote UE.

b. The remote UE may select a candidate relay UE, randomly selected from the candidate relay UEs included in the candidate set, as a relay UE.

c. The remote UE selects a relay UE from the candidate relay UEs included in the candidate set based on a UE implementation. That is, the remote UE selects the relay UE according to its implementation method.

Parameters used for the minimum condition for determining a candidate relay UE included in the candidate set may be preconfigured or may be configured by a network. The method a of the aforementioned methods a, b and c, that is, the method of assigning ranking to candidate relay UEs, has an advantage in that parameters used to assign ranking may be preconfigured or a network may control the parameters. Which one of the methods a, b and c will be used may be configured or preconfigured by the network.

Case 3: If a remote UE connected to a relay UE enters cell coverage.

In this case, the remote UE performs cell selection for selecting an E-UTRAN cell. A UE may trigger an RRC connection establishment procedure depending on the EMM state. For example, in order to perform tracking area (TA) update, the UE may trigger the RRC connection establishment procedure.

If a remote UE connected to a relay UE enters cell coverage of a specific eNB from out-of-cell coverage and detects the specific eNB, the remote UE changes the state in which service is received from a relay UE to the state in which the service is received from the specific eNB.

Case 4: If a remote UE out of cell coverage is connected to a relay UE.

In this case, the remote UE may perform a first relay UE selection process including the following two steps.

1. A set of relay UEs (this is called a candidate set) that satisfy the minimum condition, such as that connectivity and a sidelink measured value exceed a specific threshold, is generated. To this end, the remote UE may use a sidelink discovery operation, that is, a procedure of the remote UE attempting to receive a sidelink discovery signal transmitted by a relay UE.

2. A relay UE is selected. The relay UE selection process may be performed by any one of the followings.

a. A remote UE may assign ranking to candidate relay UEs included in a candidate set and select a candidate relay UE having the highest ranking as a relay UE. The ranking may be assigned based on a sidelink RSRP (e.g., SD-RSRP) measured value between each candidate relay UE and the remote UE.

b. The remote UE may select a candidate relay UE, randomly selected from the candidate relay UEs included in the candidate set, as a relay UE.

c. The remote UE selects a relay UE from the candidate relay UEs included in the candidate set based on a UE implementation. That is, the remote UE selects the relay UE according to its implementation method.

Parameters used for the minimum condition for determining a candidate relay UE included in the candidate set may be preconfigured or may be configured by a network. The method a of the aforementioned methods a, b and c, that is, the method of assigning ranking to candidate relay UEs, has an advantage in that parameters used to assign ranking may be preconfigured or a network may control the parameters. Which one of the methods a, b and c will be used may be configured or preconfigured by the network.

If the following conditions are satisfied, a remote UE may start a procedure for selecting a relay UE. In this case, the relay UE means a UE playing the role of a relay between the remote UE and a network.

If the remote UE obtains a list of candidate relay UEs satisfying the upper layer criteria and a list of candidate relay UEs satisfying the lower layer criteria by monitoring a relay discovery signal, the remote UE may start the procedure of selecting a relay UE. The relay discovery signal may be a discovery signal transmitted by a specific UE for the purpose of providing a relay operation.

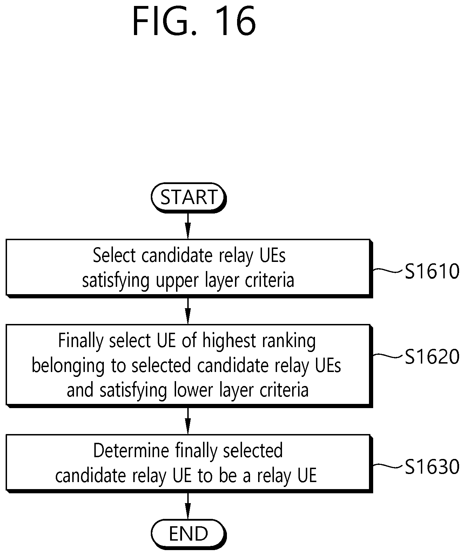

FIG. 16 shows a method of selecting a relay UE which is performed by a remote UE according to an embodiment of the present invention.

Referring to FIG. 16, the remote UE selects candidate relay UEs that satisfy the upper layer criteria (S1610). The number of candidate relay UEs that satisfy the upper layer criteria and that are selected may be one or plural. In this case, it is assumed that a plurality of UEs satisfy the upper layer criteria. The upper layer criteria may be criteria not related to wireless communication (or wireless communication). For example, the upper layer criteria may be conditions based on relay service code by which connectivity service provided by a candidate relay UE can be identified. The remote UE may select a candidate relay UE in the mind of determining whether connectivity service identified by relay service code provided by the candidate relay UE corresponds to a required connectivity service. A high layer may be a non-access stratum (NAS) layer or a layer responsible for a ProSe high layer operation (e.g., a ProSe protocol layer).

The remote UE finally selects a UE that satisfies the lower layer criteria and that has the highest ranking from the selected candidate relay UEs (S1620).

In this case, the lower layer criteria are criteria related to radio (or wireless communication or a radio channel). For example, quality of a signal received from a sidelink between a specific candidate relay UE and a remote UE (this may be called SD-RSRP) may be called the lower layer criteria because the quality of the signal is a criterion related to radio. The lower layer criteria may include a condition that quality of a radio link (S-RSRP or SD-RSRP), that is, a link between the remote UE and the candidate relay UE, is a threshold or more for the sidelink. The remote UE may finally select a candidate relay UE (e.g., a UE having the highest SD-RSRP value) that belongs to candidate relay UEs satisfying the lower layer criteria, for example, candidate relay UEs having a measured threshold or more of predetermined or preset SD-RSRP, as a relay UE.

The remote UE determines the finally selected candidate relay UE as a relay UE (S1630).

The remote UE may transmit a relay connection request message to the determined relay UE. That is, a relay connection procedure may be initiated between the remote UE and the relay UE.

If the remote UE selects the relay UE (a UE performing relay between the UE and a network) based on only the lower layer criteria, such as PC5 measurement, that is, sidelink measurement between the remote UE and the relay UE, the network may not properly control the selection, and the selection of the relay UE may not be proper. In contrast, in the present invention, a remote UE selects a relay UE using both the lower layer criteria and the upper layer criteria. The upper layer criteria are criteria not related to wireless communication, and may be criteria related to the type, object, and the type of application of relay service provided by a relay UE, for example. The remote UE selects a UE that satisfies the lower layer criteria and that has the best channel quality, such as a candidate relay UE satisfying the upper layer criteria. Accordingly, efficiency in the selection of a relay UE is improved.

In accordance with the method of FIG. 16, a UE may operate as follows.

The remote UE may search for and receive a signal transmitted by surrounding UEs, for example, a discovery signal. Each of the UEs located around the remote UE may be said to be a candidate relay UE capable of providing a relay service to the remote UE.

After the remote UE obtains information included in the signal received from each candidate relay UE, it notifies its own high layer of the information.

The signal received from the candidate relay UE may include the following information. 1) the ID of a candidate relay UE, 2) the PLMN of the candidate relay UE, 3) a relay method supported by the candidate relay UE (e.g., may provide notification of at least one relay method that belongs to a method of relaying a signal in a one-to-one manner like unicast and a method of relaying a signal in a one-to-many manner like group cast or broadcast and that is supported by the candidate relay UE), 4) the group ID of a UE group or a list of group IDs by which the candidate relay UE can provide a relay service, 5) measured quality (S-RSRP/SD-RSRP) in a sidelink with each candidate relay UE, and 6) relay service code. Some of the pieces of information may be used to determine the upper layer criteria for selecting a relay UE, and some of the pieces of information may be used to determine the lower layer criteria for selecting a relay UE. The SD-RSRP may be generated in such a manner that the remote UE receives a discovery signal transmitted by the candidate relay UE and measures the discovery signal.

If there is at least one suitable candidate relay UE capable of providing a relay service required by a remote UE, the high layer of the remote UE selects the at least one candidate relay UE.

If the one candidate relay UE is selected as a relay UE, the high layer of the remote UE initiates a relay link establishment procedure. If a plurality of candidate relay UEs is selected as relay UEs, the AS layer of a remote UE finally selects only one of the plurality of candidate relay UEs as a relay UE according to a RAN condition. The RAN condition may be, for example, a condition on which measured quality (e.g., RSRP) in a sidelink with each of the plurality of candidate relay UEs must be a specific value or more. The high layer of the remote UE may notify the lower layer of the remote UE of conditions that must be satisfied when a relay UE is selected.

The conditions may be set based on at least one of 1) the serving cell ID of a candidate relay UE, 2) the frequency of the serving cell of the candidate relay UE, 3) the tracking area (TA) of the serving cell of the candidate relay, 4) the PLMN ID of the candidate relay UE, 5) a relay method supported by the candidate relay UE (e.g., may provide notification of at least one relay method that belongs to a method of relaying a signal in a one-to-one manner like unicast and a method of relaying a signal in a one-to-many manner like group cast or broadcast and that is supported by the candidate relay UE), 6) the group ID of a UE group or a list of group IDs to which the candidate relay UE can provide a relay service, and 7) relay service code, for example. The remote UE may search for and receive a signal transmitted by candidate relay UEs that satisfy the conditions.

The AS layer of the remote UE selects one candidate relay UE that satisfies the conditions and another wireless communication-related condition (e.g., order based on SD-RSRP) as a relay UE. If one candidate relay UE is selected as the relay UE in the selection process, the remote UE notifies its own high layer of information about the selected candidate relay UE.

The information about the candidate relay UE may include at least one of the UE ID, PLMN ID and supported relay type of the selected candidate relay UE and the ID of a UE group capable of providing a relay service, for example.

Whether a relay UE will be finally selected in which layer of a remote UE when the remote UE selects the relay UE is described below. That is, when a UE selects a relay UE by taking into consideration both the upper layer criteria and the lower layer criteria, whether the relay UE will be finally selected in which layer of the UE may be a problem of a UE implementation.

As described above, the selection/reselection of a relay UE may include criteria related to wireless communication (lower layer criteria) and criteria (upper layer criteria) not related to wireless communication (or a radio channel). The criteria related to wireless communication include suitability in the selection of a relay UE and a criterion for triggering relay UE reselection, for example. If the suitability in the selection of a relay UE is determined based on RSRP (e.g., S-RSRP/SD-RSRP) of a sidelink between the remote UE and the relay UE, this may be said to be a criterion related to wireless communication because it is related to a wireless communication channel environment. The criteria not related to wireless communication may include relay service code, for example. The relay service code may be determined by the contents/use of a relay service. In this case, the criteria may not be said to be criteria related to wireless communication.

In the AS layer criterion, a minimum criterion is a suitability condition. A candidate relay UE belonging to candidate relay UEs and having the highest ranking may be selected.

A finally selected relay UE may have to satisfy both the upper layer criteria and the AS layer criterion. In the process of selecting/reselecting a relay UE, one of the following methods may be used in a mutual action between the AS layer and a high layer.

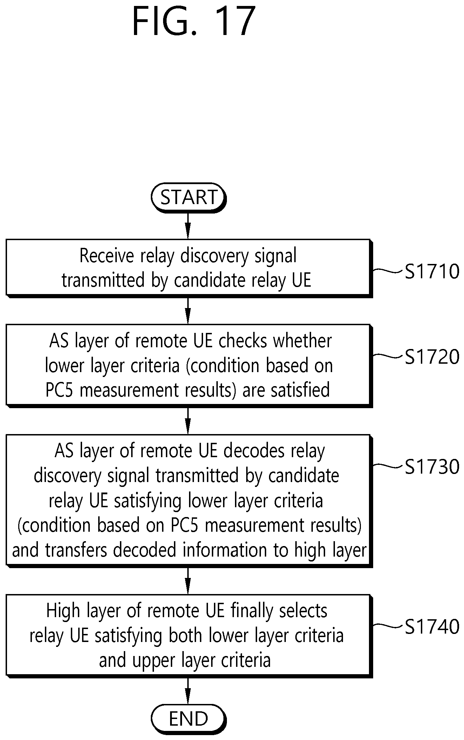

FIG. 17 shows an implementation example in which the high layer of a remote UE finally selects a relay UE. That is, FIG. 17 is a method of the high layer of a remote UE finally selecting a relay UE.

The AS layer of a remote UE receives a relay discovery signal from a candidate relay UE(S1710).

The AS layer of the remote UE checks the suitability of the candidate relay UE based on PC5 measurement, that is, signal measurement (e.g., SD-RSRP) results in a sidelink between the remote UE and the candidate relay UE (S1720). This may be said to check whether the lower layer criteria are satisfied.

The AS layer of the remote UE decodes the discovery signal of the candidate relay UE that satisfies the suitability condition and transfers the decoded information to the high layer of the remote UE itself (S1730). In this case, the AS layer of the remote UE may also transfer the PC5 measurement results to the high layer.

Alternatively, the AS layer of the remote UE may decode the discovery signal. If the discovery signal has been received from resources reserved for the relay UE, the AS layer of the remote UE may transfer the decoded information to a ProSe high layer when the suitability condition is satisfied.

When the AS layer of the remote UE transfers the received discovery signal to its high layer, if the discovery signal has only to be received in resources reserved for a relay purpose, the AS layer of the remote UE may notify the high layer of the PC5 measurement results of the discovery signal. If the discovery signal has been received in resources other than resources reserved for a relay purpose, the AS layer of the remote UE may not notify the high layer of the PC5 measurement results.

When the AS layer of the remote UE transfers the received discovery signal to the high layer, the AS layer of the remote UE may notify the high layer whether the discovery signal is for a relay purpose. When the AS layer of the remote UE transfers the received discovery signal to the high layer, the AS layer of the remote UE may notify the high layer whether the discovery signal is for a public safety purpose.

The high layer of the remote UE finally selects a relay UE by evaluating the relay UE selection/reselection criteria by taking into consideration both the criteria related to wireless communication (lower layer criteria) and the criteria not related to wireless communication (upper layer criteria) (S1740).

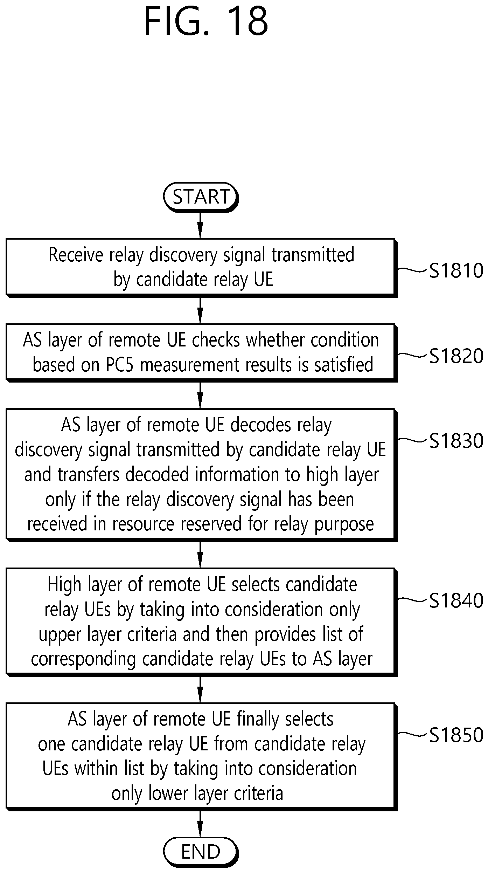

FIG. 18 illustrates a method of the AS layer of a remote UE finally performing the selection of a relay UE.

Referring to FIG. 18, the AS layer of a remote UE receives a discovery signal from a candidate relay UE (S1810).

The AS layer of the remote UE checks the suitability of the candidate relay UE based on PC5 measurement, that is, signal measurement (e.g., SD-RSRP) in a sidelink between the remote UE and the candidate relay UE (S1820).

The AS layer of the remote UE decodes the discovery signal. If the discovery signal has been received in resources reserved for a relay purpose, the AS layer of the remote UE transfers the decoded signal to its high layer when only the suitability condition is satisfied (S1830).

When the AS layer of the remote UE transfers the received discovery signal to its high layer, the AS layer of the remote UE may notify the high layer of the PC5 measurement results of the discovery signal if the discovery signal has only to be received in resources reserved for a relay purpose (e.g., public safety).

When the AS layer of the remote UE transfers the received discovery signal to the high layer, the AS layer of the remote UE may notify the high layer whether the discovery signal is for a relay purpose. When the AS layer of the remote UE transfers the received discovery signal to the high layer, the AS layer of the remote UE may notify the high layer whether the discovery signal is a public safety purpose.

The high layer of the remote UE selects candidate relay UEs by taking into consideration only the criteria not related to wireless communication, that is, the upper layer criteria, and provides a list of the candidate relay UEs to the AS layer (S1840).

The AS layer of the remote UE finally selects a relay UE by evaluating the relay UE selection/reselection criterion by taking into consideration only the criteria related to wireless communication, that is, the lower layer criteria (S1850).

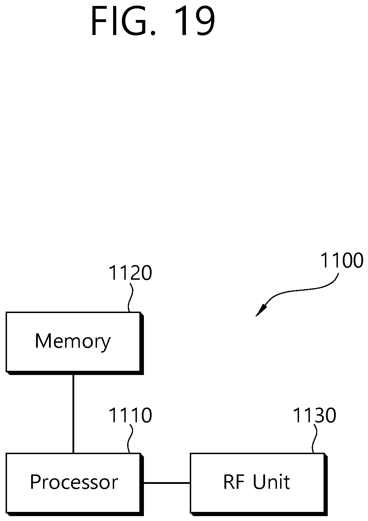

FIG. 19 is a block diagram illustrating a terminal in which an embodiment of the present invention is implemented.

Referring to FIG. 19, a terminal 1100 includes a processor 1100, a memory 1120, and a radio frequency (RF) unit 1130. The processor 1110 implements a function, a process, and/or a method which are proposed. The RF unit 1130 is connected to the processor 1110 and sends and receives radio signals.

The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices. The RF unit may include a baseband circuit for processing a radio signal. When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means.

**Claims**

1. A method of selecting a relay UE in a wireless communication system, the method being performed by a remote UE and comprising:

   selecting candidate relay UEs satisfying upper layer criteria;
   finally selecting a candidate relay UE of a highest ranking which belongs to the selected candidate relay UEs and satisfies lower layer criteria; and
   determining the finally selected candidate relay UE to be a relay UE.

2. The method of claim 1, wherein:

   the lower layer criteria are criteria related to wireless communication, and
   the upper layer criteria are criteria not related to wireless communication.

3. The method of claim 2, wherein the lower layer criteria comprise a condition on which quality of a radio link for a sidelink which is a link between the remote UE and the candidate relay UE is a threshold or more.

4. The method of claim 3, wherein measurement of the quality of the radio link for the sidelink is performed by measuring a sidelink discovery signal received by the remote UE.

5. The method of claim 1, wherein a relay connection request message is transmitted to the determined relay UE.

6. The method of claim 2, wherein the finally selected candidate relay UE is a candidate relay UE which belongs to the candidate relay UEs satisfying the lower layer criteria and which has a best quality of a radio link for a sidelink.

7. The method of claim 2, wherein the upper layer criteria comprise a condition using relay service code which enables connectivity service provided by the candidate relay UE to be identified.

8. The method of claim 1, wherein the relay UE is a UE functioning to relay between the remote UE and the network.

9. The method of claim 1, wherein the finally selected candidate relay UE is selected in an access Stratum (AS) layer of the remote UE.

10. The method of claim 1, wherein the finally selected candidate relay UE is selected in a non-access stratum (NAS) layer of the remote UE.

11. A user equipment (UE), comprising:

a radio frequency (RF) unit transceiving a radio signal; and
a processor operatively coupled to the RF unit,
wherein the processor selects candidate relay UEs satisfying upper layer criteria, finally selects a candidate relay UE of a highest ranking which belongs to the selected candidate relay UEs and satisfies lower layer criteria, and determines the finally selected candidate relay UE to be a relay UE.

# FIG. 1

# FIG. 2

```
┌ ─ ─ ─ ─ ─ ─ ─ ─ ─ ┐   ┌ ─ ─ ─ ─ ─ ─ ─ ─ ─ ┐
  UE                      BS
│  ┌──────────┐    │   │  ┌──────────┐    │
   │   PDCP   │ ◄──────────► │   PDCP   │
│  └──────────┘    │   │  └──────────┘    │

│  ┌──────────┐    │   │  ┌──────────┐    │
   │   RLC    │ ◄──────────► │   RLC    │
│  └──────────┘    │   │  └──────────┘    │

│  ┌──────────┐    │   │  ┌──────────┐    │
   │   MAC    │ ◄──────────► │   MAC    │
│  └──────────┘    │   │  └──────────┘    │

│  ┌──────────┐    │   │  ┌──────────┐    │
   │   PHY    │ ◄──────────► │   PHY    │
│  └──────────┘    │   │  └──────────┘    │
└ ─ ─ ─ ─ ─ ─ ─ ─ ─ ┘   └ ─ ─ ─ ─ ─ ─ ─ ─ ─ ┘
```

# FIG. 3

| UE | BS | MME |
|---|---|---|
| NAS | | NAS |
| RRC | RRC | |
| PDCP | PDCP | |
| RLC | RLC | |
| MAC | MAC | |
| PHY | PHY | |

# FIG. 4

```
┌─────────────────────────────┐
│  Select Access Network (PLMN) and   │
│  Wireless Communication Method (RAT) │──S410
└─────────────────────────────┘
              │
              ▼
┌─────────────────────────────┐
│      Initial Cell Selection        │──S420
└─────────────────────────────┘
              │
              ▼
         ╱─────────────╲
        ╱  Is It Necessary To  ╲      No
        ╲  Register Network?   ╱ ──────
         ╲─────────────╱
              │ Yes
              ▼
┌─────────────────────────────┐
│  Perform Network Registration      │──S430
│      (NAS Procedure)              │
└─────────────────────────────┘
              │
              ▼
┌─────────────────────────────┐
│       Cell Reselection            │──S440
└─────────────────────────────┘
              │
              ▼
   No    ╱─────────────╲    Yes
  ───────╲ Is New Cell Selected? ╱───────
         ╲─────────────╱

        Measurement
```

# FIG. 5

UE                     NETWORK

RRC CONNECTION REQUEST     S510

RRC CONNECTION CONFIGURATION     S520

COMPLETION OF RRC CONNECTION CONFIGURATION     S530

# FIG. 6

| UE | | NETWORK |

RRC CONNECTION RECONFIGURATION — S610

COMPLETION OF RRC CONNECTION
RECONFIGURATION — S620

# FIG. 7

START • • • RRC Connected State

Stop Use of Every RB (Except SRB 0), Initialize AS Layer —S710

Select Cell —S720

Determine Whether Selected Cell is Appropriate —S730

Is Appropriate E-UTRAN Cell Selected? — NO

YES

Transmit RRC Connection Re-establishment Request Message —S740

Is RRC Connection Re-establishment Message Received? — NO

YES

Enter RRC Idle State —S750

Transmit RRC Connection Re-establishment Complete Message —S760

END

# FIG. 8

Initial Cell Selection — S801

Camped Normally — S803

Any Cell Selection — S802

Cell Reselection Evaluation Process — S804

Camped on Any Cell — S805

Cell Reselection Evaluation Process — S806

# FIG. 9

EP 3 282 767 A1

ProSe Application Program — UE — LTE-Uu — E-UTRAN — S1 — EPC — SGi

PC5

ProSe Application Program — UE — LTE-Uu

PC3

PC4

ProSe Function — PC2 — ProSe Application Server

PC6

PC1

# FIG. 10

(a)

(b)

(c)

(d)

# FIG. 11

# FIG. 12

UE A

ProSe Protocol ⟷ ProSe Protocol

MAC ⟷ MAC

PHY ⟷ PHY

UE B

PC5

# FIG. 13

131 eNB — Backhaul link — 132 rUE — Access link — 132 UE

# FIG. 14

# FIG. 15

Remote UE      Candidate relay UE      Network

Configure relay UE — S151

Transmit relay discovery signal — S152

Establish sidelink between remote UE and relay UE — S153

EP 3 282 767 A1

# FIG. 16

START

Select candidate relay UEs
satisfying upper layer criteria — S1610

Finally select UE of highest ranking
belonging to selected candidate relay UEs
and satisfying lower layer criteria — S1620

Determine finally selected
candidate relay UE to be a relay UE — S1630

END

# FIG. 17

START

Receive relay discovery signal
transmitted by candidate relay UE ⟶ S1710

AS layer of remote UE checks whether
lower layer criteria (condition based on
PC5 measurement results) are satisfied ⟶ S1720

AS layer of remote UE decodes relay
discovery signal transmitted by candidate
relay UE satisfying lower layer criteria
(condition based on PC5 measurement results)
and transfers decoded information to high layer ⟶ S1730

High layer of remote UE finally selects
relay UE satisfying both lower layer criteria
and upper layer criteria ⟶ S1740

END

# FIG. 18

START

Receive relay discovery signal transmitted
by candidate relay UE ~S1810

AS layer of remote UE checks whether condition
based on PC5 measurement results is satisfied ~S1820

AS layer of remote UE decodes relay
discovery signal transmitted by candidate relay UE
and transfers decoded information to high layer
only if the relay discovery signal has been
received in resource reserved for relay purpose ~S1830

High layer of remote UE selects candidate
relay UEs by taking into consideration only
upper layer criteria and then provides list of
corresponding candidate relay UEs to AS layer ~S1840

AS layer of remote UE finally selects
one candidate relay UE from candidate relay
UEs within list by taking into consideration
only lower layer criteria ~S1850

END

# FIG. 19

## INTERNATIONAL SEARCH REPORT

| | International application No. |
|---|---|
| | **PCT/KR2016/003734** |

**A. CLASSIFICATION OF SUBJECT MATTER**

*H04W 40/22(2009.01)i, H04W 40/12(2009.01)i, H04W 84/04(2009.01)i, H04W 88/02(2009.01)i*

According to International Patent Classification (IPC) or to both national classification and IPC

**B. FIELDS SEARCHED**

Minimum documentation searched (classification system followed by classification symbols)
H04W 40/22; H04B 7/24; H04W 48/16; H04B 17/00; H04W 92/18; H04W 84/12; H04W 40/12; H04W 84/04; H04W 88/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: remote terminal, relay terminal, upper layer criteria(upper layer criteria), lower layer criteria(lower layer criteria), ranking, candidate relay terminal determination

**C. DOCUMENTS CONSIDERED TO BE RELEVANT**

| Category* | Citation of document, with indication, where appropriate, of the relevant passages | Relevant to claim No. |
|---|---|---|
| A | KR 10-2014-0141210 A (DONGGUK UNIVERSITY INDUSTRY-ACADEMIC COOPERATION FOUNDATION et al.) 10 December 2014 See paragraphs [0078], [0080]; claims 1, 6; and figure 7. | 1-11 |
| A | KR 10-2011-0095178 A (ELECTRONICS AND TELECOMMUNICATIONS RESEARCH INSTITUTE) 24 August 2011 See paragraphs [0020], [0035], [0058]-[0068]; and figure 6. | 1-11 |
| A | LG ELECTRONICS, "Support of UE Interested in both D2D and MBMS", R2-144494, 3GPP TSG-RAN WG2 #87bis, Shanghai, China, 26 September 2014 See scenario 1. | 1-11 |
| A | LG ELECTRONICS INC. et al., "Further Discussion on Cell Reselection for D2D Communication and D2D Discovery", R2-145074, 3GPP TSG-RAN WG2 #88, Sanfrancisco, USA, 08 November 2014 See section 2. | 1-11 |
| A | KR 10-2014-0098426 A (SAMSUNG ELECTRONICS CO., LTD. et al.) 08 August 2014 See paragraphs [0095]-[0102]; and figure 9. | 1-11 |

☐ Further documents are listed in the continuation of Box C.    ☒ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 JULY 2016 (14.07.2016) | **15 JULY 2016 (15.07.2016)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/003734**

| Patent document cited in search report | Publication date | Patent family member | Publication date |
|---|---|---|---|
| KR 10-2014-0141210 A | 10/12/2014 | KR 10-1481150 B1 | 14/01/2015 |
| KR 10-2011-0095178 A | 24/08/2011 | CN 102812647 A | 05/12/2012 |
| | | CN 102812647 B | 22/07/2015 |
| | | EP 2538581 A2 | 26/12/2012 |
| | | EP 2538581 A4 | 04/09/2013 |
| | | JP 05628344 B2 | 19/11/2014 |
| | | JP 2013-520128 A | 30/05/2013 |
| | | JP 2014-239512 A | 18/12/2014 |
| | | US 2012-0314609 A1 | 13/12/2012 |
| | | US 2014-0370802 A1 | 18/12/2014 |
| | | US 8830861 B2 | 09/09/2014 |
| | | WO 2011-102634 A2 | 25/08/2011 |
| KR 10-2014-0098426 A | 08/08/2014 | US 2015-0365992 A1 | 17/12/2015 |
| | | WO 2014-119861 A1 | 07/08/2014 |

Form PCT/ISA/210 (patent family annex) (January 2015)

**EP 3 282 767 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- User Equipment (UE) procedures in idle mode (Release 8). *3GPP TS 36.304,* March 2009